# EUROPEAN PATENT APPLICATION

(11) **EP 2 792 907 A1**
(43) Date of publication of application: **22.10.2014**
(21) Application number: 13164517.8
(22) Date of filing: 19.04.2013
(51) Int. Cl.: F16H 25/22

(54) **Roller screw mechanism**

(71) Applicant: Aktiebolaget SKF, 415 50 Göteborg (SE)
(72) Inventor: Abevi, Folly, 73000 CHAMBERY (FR); Allegri, Eric, 73800 MONTMELIAN (FR)
(74) Representative: Casalonga, Axel

(57) **Abstract**

The roller screw mechanism comprises a screw 12 provided with an outer thread 14, a nut 16 surrounding and coaxial with said screw, said nut being provided with an inner thread 18, a plurality of rollers 20 radially disposed between the screw and the nut and each provided with an outer thread 22 and with two outer gear teeth 24, 26, two gear wheels 36, 38 each provided with gear teeth 40, 42 meshing with said gear teeth of the rollers, and two spacer rings 44, 46 for maintaining the rollers circumferentially spaced apart. The spacer rings 44, 46 are axially offset towards the inside relative to the gear teeth 40, 42 of the gear wheels.

## Description

The present invention relates to the field of roller screw mechanisms for transforming a rotary movement into a linear translation movement, and vice versa.

Such a mechanism is provided with a screw having an outer thread, with a nut arranged around the screw and having an inner thread, and with a plurality of longitudinal rollers having an outer thread engaging the outer and inner threads of the screw and of the nut. The outer thread of each roller is extended axially at each end by gear teeth themselves extended axially by a cylindrical stud or pivot extending outwards.

In a first type of roller screw mechanism, the threads of the rollers and the thread of the nut have helix angles that are identical to each other and different to that of the thread of the screw such that, when the screw rotates in relation to the nut, the rollers rotate on themselves and roll about the screw without moving axially inside the nut. The rollers are rotationally guided by gear wheels mounted in a non-threaded part of the nut and having inner gear teeth meshing with the gear teeth of said rollers. The roller screw mechanism further comprises two end spacer rings each mounted radially between the screw and the associated gear wheel. Each spacer ring includes a plurality of axial through-holes inside which the studs of the rollers are housed. The spacer rings enable the rollers to be carried and the regular circumferential spacing thereof to be kept. Such mechanism is called a planetary roller screw.

A second type of roller screw mechanism has a similar operating principle but is different as a result of an inverted arrangement. The helix angles of the threads of the rollers, of the screw and of the nut are selected such that, when the screw rotates in relation to the nut, the rollers rotate on themselves about the screw and move axially in the nut. The rollers are rotationally guided by outer gear teeth provided on the screw and meshing with the gear teeth of the rollers. Two spacer rings are also provided to ensure the even circumferential position of the rollers. Such mechanism is called an inverted roller screw.

With the current design of roller screw mechanisms, at each side of the thread provided on the nut, there is a zone which is not used for carrying the loads. For a given axial dimension of the nut, this leads to a limited load capacity of the roller screw mechanisms

One aim of the present invention is to overcome this drawback.

It is a particular object of the present invention to provide a roller screw mechanism wherein, for a given axial dimension, the load capacity is increased.

In one embodiment, the roller screw mechanism comprises a screw provided with an outer thread, a nut surrounding and coaxial with said screw, said nut being provided with an inner thread, a plurality of rollers radially disposed between the screw and the nut and each provided with an outer thread engaging said outer and inner threads and with two outer gear teeth, two gear wheels each provided with gear teeth meshing with said gear teeth of the rollers, and two spacer rings for maintaining the rollers circumferentially spaced apart. The spacer rings are axially offset towards the inside relative to the gear teeth of the gear wheels.

Thanks to the relative disposition of the spacer rings and the gear teeth of the gear wheels, the contact points between the outer thread of each roller and the threads of the screw and the nut can be increased. For a given axial dimension of the nut, the load capacity of the roller screw mechanism is thus significantly increased. The lifetime of the mechanism is also increased.

Preferably, each spacer ring is axially located between the outer thread of each roller and one of the outer gear teeth of said roller. Each spacer ring may comprise a plurality of recesses radially open and in which parts of the rollers are located.

In one embodiment, each roller comprises an outer groove axially located between the outer thread and each outer gear teeth, each groove of said rollers being located in one of the recesses of each spacer ring. The roller screw mechanism may further comprise two elastic retainer rings each mounted in a groove provided on the associated spacer ring in order to radially hold therebetween the rollers into the recesses of said spacer ring.

In one embodiment, the gear wheels are mounted in a non-threaded part of the nut. Preferably, each spacer ring is radially disposed between the outer thread of the screw and the associated gear wheel. Each spacer ring may be mounted into a bore of the associated gear wheel extending the gear teeth. In another embodiment, the gear wheels are provided on the screw.

In one embodiment, each roller comprises, at each axial end, an end frontal surface oriented axially outwards and delimiting axially the associated outer gear teeth. As an alternative, each roller may comprise, at each axial end, a cylindrical stud extending axially outwards the associated outer gear teeth. Such studs may be provided to guide the rollers during the threading operations.

The gear teeth of the rollers and the gear teeth of the gear wheels may each have in cross-section an involute profile. Alternatively, the gear teeth of the rollers and the gear teeth of the gear wheels each have in cross-section a circular arc-profile. For instance, the gear teeth of the rollers and the gear teeth of the gear wheels may each have in cross-section a hypocycloid profile.

The invention also relates to an actuator comprising a rotating means and a roller screw mechanism as defined above, the screw of said mechanism being coupled with the rotating means.

The present invention and its advantages will be better understood by studying the detailed description of specific embodiments given by way of non-limiting examples and illustrated by the appended drawings on which:
- Figure 1 is a cross-section of a roller screw mechanism according to a first example of the invention,
- Figure 2 is a front view of a roller of the mechanism of Figure 1,
- Figure 3 is a perspective view of a spacer ring of the mechanism of Figure 1,
- Figure 4 is a cross-section of a roller screw mechanism according to a second example of the invention,
- Figure 5 is a section on V-V of Figure 4,
- Figure 6 is a cross-section of a roller screw mechanism according to a third example of the invention, and
- Figure 7 is a section on VII-VII of Figure 6.

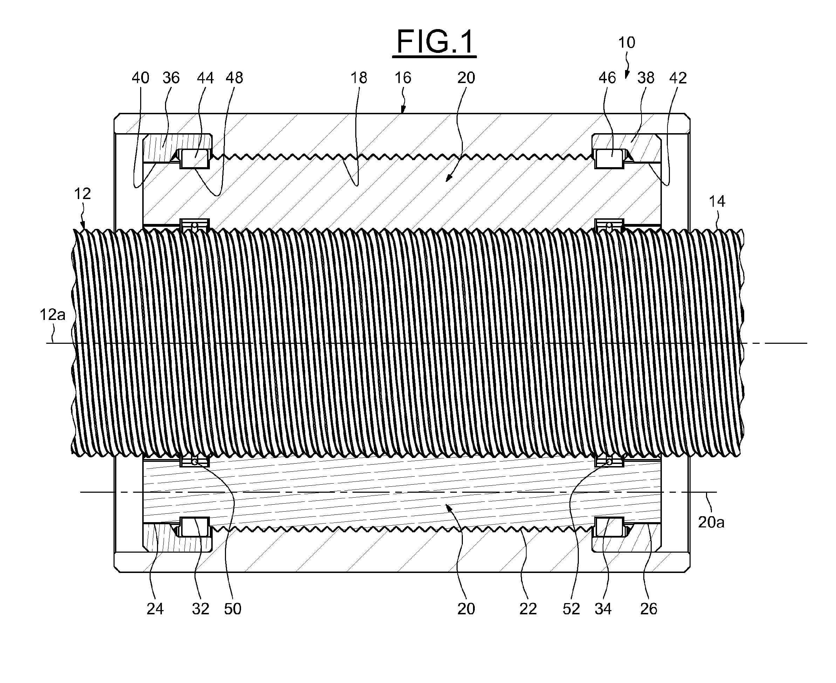

In Figure 1, a planetary roller screw mechanism 10 comprises a screw 2, with an axis 12, provided with an outer thread 14, a nut 16 mounted coaxially about the screw 12 and provided with an inner thread 18, the internal diameter of which is greater than the external diameter of the outer thread 14, and a plurality of longitudinal rollers 20 arranged radially between the screw 12 and the nut 16. The screw 12 extends longitudinally through a cylindrical bore of the nut 16 on which the inner thread 18 is formed.

The rollers 20 are identical to each other and are distributed regularly around the screw 12. Each roller 20 extends along an axis 20a which is coaxial with the axis 12a of the screw and comprises an outer thread 22 engaging the thread 14 of the screw and the thread 18 of the nut.

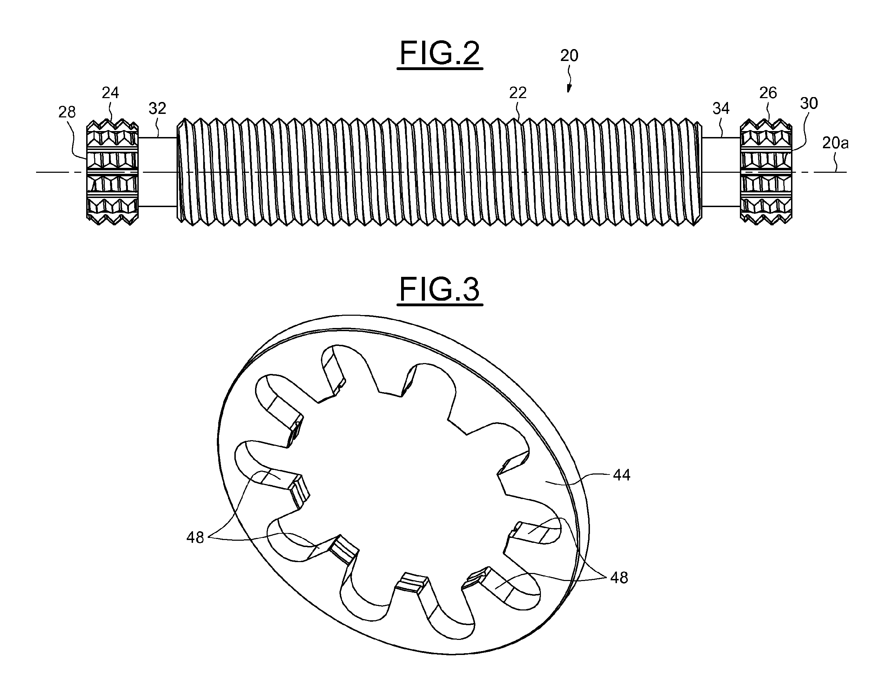

As shown more clearly on Figure 2, each roller 20 also comprises, at each axial end, outer gear teeth 24, 26 extended radially by an end frontal surface 28, 30 oriented axially outwards. Each roller 20 further comprises an annular outer groove 32, 34 formed axially between the thread 22 and each gear teeth 24, 26. Each gear teeth 24, 26 are axially delimited by the associated groove 32, 34 and the end frontal surface 28, 30. The outer thread 22 of each roller is axially located between the two gear teeth 24, 26.

Referring once again to Figure 1, the roller screw mechanism 10 also comprises two annular gear wheels 36, 38 fixed in a non-threaded part of the bore of the nut 16 and each comprising inner gear teeth 40, 42 meshing the gear teeth 24, 26 respectively of the rollers 20 for the synchronization thereof. Each gear wheel 36, 38 axially bears against a radial surface of the nut provided between the inner thread 18 and the associated non-threaded part of said nut. The gear wheels 36, 38 are identical to one another. The gear wheels 36, 38 and the rollers 10 are entirely housed into the nut 16, i.e. they do not axially protrude outwards relative to the nut.

The mechanism 10 further comprises two annular guides or spacer rings 44, 46 mounted in the nut 16 each axially at one side of the outer thread 22 of the rollers. Each spacer ring 44, 46 is mounted radially between the thread 14 of the screw and the associated gear wheel 36, 38. Each spacer ring 44, 46 is mounted into a bore (not referenced) of the associated gear wheel 36, 38 extending axially inwards the gear teeth 40, 42. As shown more clearly on Figure 3, the spacer ring 44 comprises a plurality of recesses 48 axially open on both sides and radially open inwards. In the disclosed example, there are ten recesses. The recesses 48 are distributed regularly in the circumferential direction and provided to receive the grooves 32 of the rollers 20.

Referring once again to Figure 1, with regard to the spacer ring 44, the outer thread 22 of each roller is axially disposed on one side and the gear teeth 24 is axially disposed on the other side. The spacer rings 44, 46 are identical to one another. For each roller 20, the grooves 32, 34 of said roller are located inside the recesses of the spacer rings 44, 46. The spacer rings 44, 46 enable the rollers 20 to be carried and the regular circumferential spacing thereof to be kept.

Each spacer ring 44, 46 is axially located between the outer thread 22 of each roller and the end frontal surface 28, 30 of said roller. Each spacer ring 44, 46 is axially disposed next to one of the gear teeth 40, 42 of the gear wheel 36, 38. Each spacer ring 44, 46 is axially offset towards the inside of the nut 16 with regard to the associated gear teeth 40, 42. Each spacer ring 44, 46 is axially located between the outer thread 22 of each roller 20 and the associated gear teeth 40, 42 meshing with the gear teeth 24, 26 of said roller.

The mechanism 10 further comprises elastic retainer rings 50, 52 each mounted in a groove (not referenced) formed on the bore of the associated spacer ring 44, 46 in order to radially hold the rollers into the recesses of said spacer ring. The retainer rings 50, 52 radially bear against the bore of the associated spacer ring 44, 46 and are neither in contact with the associated roller 20 nor the screw 12. The elastic retainer rings 50, 52 may be formed from metal or synthetic material. As an alternative, the retainer rings 50, 52 can be avoided.

As an example, the threads 22 of the rollers and the thread 18 of the nut have helix angles that are identical to each other and different to that of the thread 14 of the screw such that, when the screw 12 rotates in relation to the nut 16, the rollers 20 rotate on themselves and roll about the screw 12 without moving axially inside the nut 16. The rollers 20 are rotationally guided parallel with the axis 20a by the gear teeth 40, 42 of the gear wheels and by the spacer rings 44, 46. The screw 12 is axially or longitudinally moveable in relation to the rollers 20.

In the disclosed example, each gear teeth 24, 26 of the rollers are axially spaced apart from the thread 22 by the associated groove 32, 34. Alternatively, the thread 22 of each roller may be extended axially at each end by the gear teeth 24, 26. In another variant, a smooth space portion may provided axially between the thread 22 and each gear teeth 24, 26. In these two cases, each roller is deprived of grooves and there is no elastic retainer ring.

In the disclosed example, the gear teeth 24, 26 of the rollers and the gear teeth 40, 42 of the gear wheels each have in cross-section an involute profile. Alternatively, said gear teeth may have in cross-section a different profile.

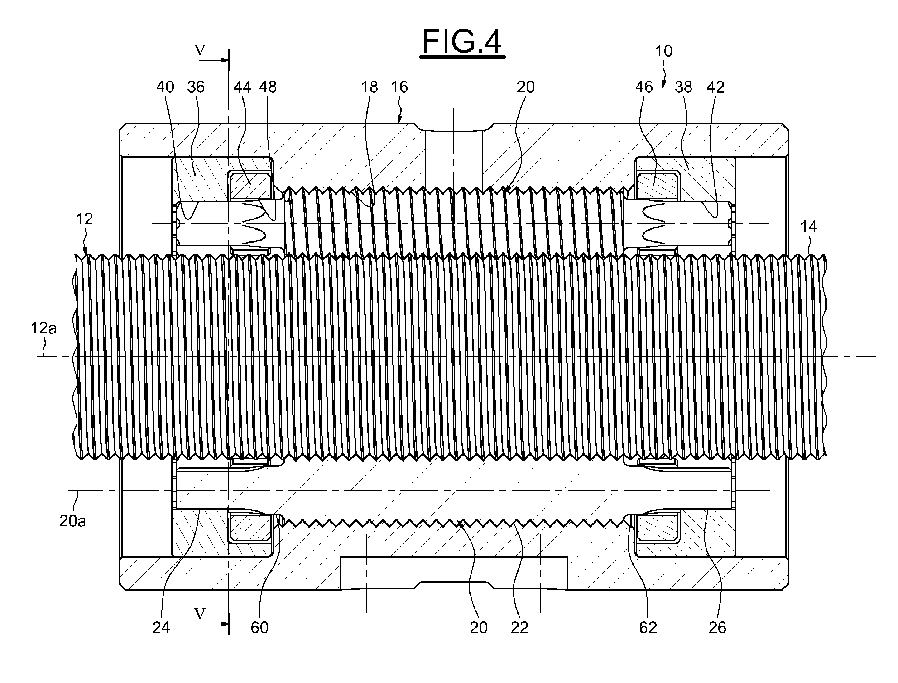

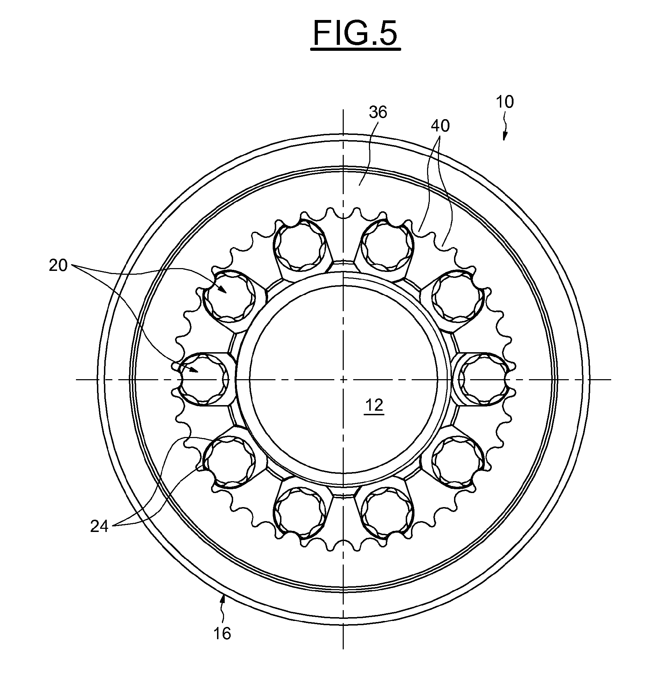

In the second example illustrated on Figures 4 and 5, in which identical parts are given identical references, the gear teeth 24, 26 of each roller each have in cross-section a concave profile curve defined by a circular arc of a circle. The circular arcs defining the tooth profile approximate a hypocycloid curve (not shown). In this example, for each roller 20, a smooth space portion 60, 62 is provided axially between the outer thread 22 and each gear teeth 24, 26. A part of the space portion 60, 62 and a part of the associated gear teeth 24, 26 are housed inside the recesses of the spacer rings 32, 34. As an alternative, no space portion could be provided on the rollers. As another alternative, the rollers may comprise a groove axially between the outer thread 22 and each gear teeth 24, 26 as disclosed in the first example. The gear teeth 40, 42 of the gear wheels 36, 38 each have in cross-section a convex profile curve defined by a circular arc of a circle which is similar to the one of the gear teeth 24, 26 of the rollers 20. The circular arcs defining the tooth profile also approximate a hypocycloid curve.

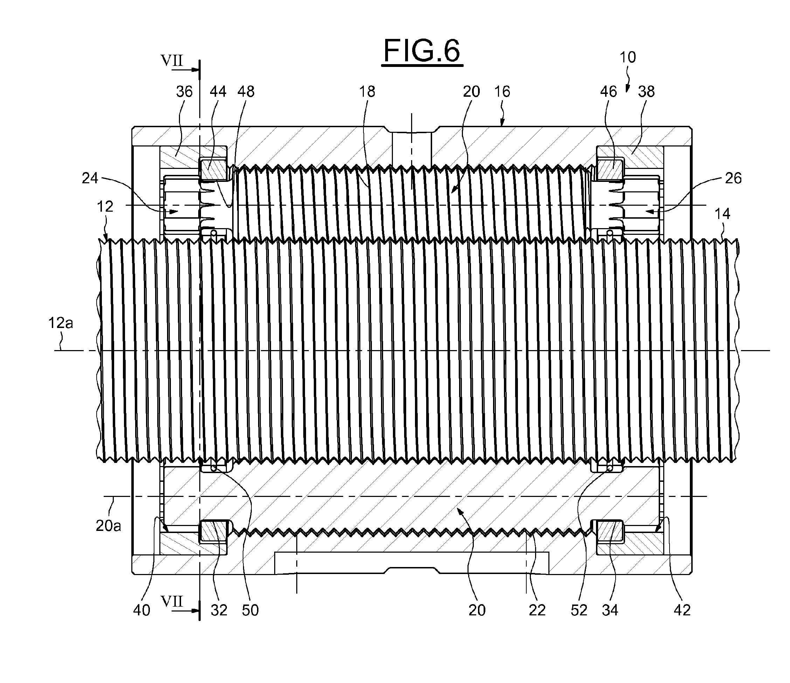

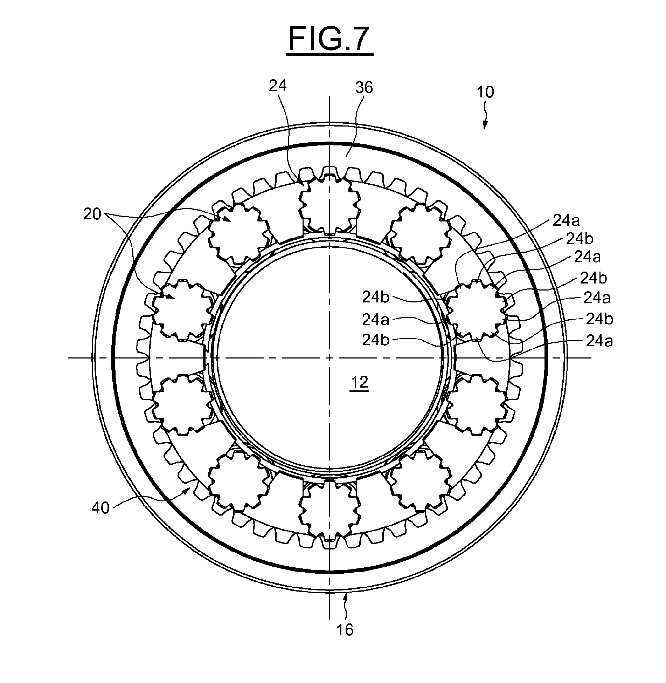

In the third example illustrated on Figures 6 and 7, in which identical parts are given identical references, the gear teeth 24 of each roller comprise a first set of teeth 24a and a second set of teeth 24b superposed on said first set so that the teeth 24b are located between the teeth 24a. Each tooth 24a, 24b of each roller has in cross-section a concave profile curve defined by a circular arc of first and second circles of same diameter. The circular arcs defining the tooth profile approximate a hypocycloid curve (not shown). Superimposing the first set of teeth 24a with the second set of teeth 24b generates the gear teeth 24 of the rollers. For each roller, the number of teeth 24a is here equal to the number of teeth 24b. A number of five teeth 24a and a number of five teeth 24b are illustrated on Figures 6 and 7. As an alternative, the total number of teeth 24 of each roller 20 could be higher than ten, for example twelve. The profile of the gear teeth 26 of each roller is similar to the one of the gear teeth 24. The meshing of the gear teeth 24, 26 of the roller with the gear teeth 40, 42 of the gear wheels is conjugated. In this example, each gear teeth 24, 26 of the rollers are axially spaced apart from the thread 22 by the associated groove 32, 34. Alternatively, the thread 22 of each roller may be extended axially at each end by the gear teeth 24, 26 or a smooth space portion may provided axially between the thread 22 and each gear teeth 24, 26.

In the second and third examples, with the convex-concave tooth profile between the gear teeth 24, 26 of the rollers and the gear teeth 40, 42 of the gear wheel, the outer diameter of the gear teeth 24, 26 of each roller is lower than the diameter of the thread root of the outer thread 22 of said roller regardless of the pitch of the roller. For that reason, the interference between the outer thread 22 of each roller and the gear teeth 24, 26 provided at each end of said roller can be avoided during the machining operations of said roller.

The disposition of each spacer ring 44, 46 axially offset towards the inside of the nut relative to the gear teeth 40, 42 of the associated gear wheel permits to obtain, for a given axial dimension of the nut 18, a roller screw mechanism with an increased load capacity. Providing such an arrangement enables the contact points between the thread 22 of each roller and the threads 14, 18 of the screw and of the nut to be increased compared with a conventional roller screw mechanism wherein the disposition of the spacer rings is axially inverted. Here, the useful length of the inner thread 18 of the nut is increased.

In the illustrated examples, for each roller, each gear teeth 24, 26 is delimited axially on the outer side by the end radial surface 28, 30 since the spacer ring 44, 46 is mounted axially on the inner side, i.e. on the side of the outer thread 22 of said roller. This leads to have rollers 20 deprived of cylindrical studs or pivots extending axially outwards the gear teeth. Accordingly, for a given axial dimension of the nut, the useful length of the outer thread 22 of each roller meshing with the threads 14, 18 of the screw and the nut can be increased while having both the rollers, the gear wheels 36, 38 and the spacer rings 44, 46 entirely housed inside the nut.

Although the invention has been illustrated on the basis of a planetary roller screw mechanism, it should be understood that the invention can also be applied to an inverted roller screw mechanism comprising gear wheels mounted on the screw and having outer gear teeth meshing with gear teeth of the rollers. With such an inverted roller screw mechanism, each spacer ring is axially offset towards the inside of said mechanism relative to the gear teeth of the associated gear wheel as described above for the planetary roller screw mechanism.

## Claims

1. Roller screw mechanism comprising a screw (12) provided with an outer thread (14), a nut (16) surrounding and coaxial with said screw, said nut being provided with an inner thread (18), a plurality of rollers (20) radially disposed between the screw and the nut and each provided with an outer thread (22) engaging said outer and inner threads (14, 18) and with two outer gear teeth (24, 26), two gear wheels (36, 38) each provided with gear teeth (40, 42) meshing with said gear teeth of the rollers, and two spacer rings (44, 46) for maintaining the rollers circumferentially spaced apart, **characterized in that** the spacer rings (44, 46) are axially offset towards the inside relative to the gear teeth (40, 42) of the gear wheels.

2. Roller screw mechanism according to claim 1, wherein each spacer ring (44, 46) is axially located between the outer thread (22) of each roller and one of the outer gear teeth (24, 26) of said roller.

3. Roller screw mechanism according to claim 1 or 2, wherein each spacer ring (44, 46) comprises a plurality of recesses (48) radially open and in which parts of the rollers are located.

4. Roller screw mechanism according to claim 3, wherein each roller (20) comprises an outer groove (32, 34) axially located between the outer thread (22) and each outer gear teeth (24, 26), each groove of said rollers being located in one of the recesses of each spacer ring.

5. Roller screw mechanism according to claim 3 or 4, further comprising two elastic retainer rings (50, 52) each mounted in a groove provided on the associated spacer ring (44, 46) in order to radially hold therebetween the rollers into the recesses of said spacer ring.

6. Roller screw mechanism according to any of the preceding claims, wherein the gear wheels (36, 38) are mounted in a non-threaded part of the nut (16).

7. Roller screw mechanism according to claim 6, wherein each spacer ring (44, 46) is radially disposed between the outer thread of the screw (12) and the associated gear wheel (36, 38).

8. Roller screw mechanism according to claim 7, wherein each spacer ring (44, 46) is mounted into a bore of the associated gear wheel extending the gear teeth (40, 42).

9. Roller screw mechanism according to any of the preceding claims 1 to 5, wherein the gear wheels are provided on the screw.

10. Roller screw mechanism according to any of the preceding claims, wherein each roller comprises, at each axial end, an end frontal surface (28, 30) oriented axially outwards and delimiting axially the associated outer gear teeth (24, 26).

11. Roller screw mechanism according to any of the preceding claims, wherein the gear teeth of the rollers and the gear teeth of the gear wheels each have in cross-section an involute profile.

12. Roller screw mechanism according to any of the preceding claims 1 to 10, wherein the gear teeth of the rollers and the gear teeth of the gear wheels each have in cross-section a circular arc-profile.

13. Roller screw mechanism according to claim 12, wherein the gear teeth of the rollers and the gear teeth of the gear wheels each have in cross-section a hypocycloid profile.

14. Actuator comprising a rotating means and a roller screw mechanism according to any one of the preceding claims, the screw of said mechanism being coupled with the rotating means.
